# EUROPÄISCHE PATENTSCHRIFT

(11) **EP 2 170 485 B1**
(45) Veröffentlichungstag und Bekanntmachung des Hinweises auf die Patenterteilung: **05.03.2014**
(21) Anmeldenummer: 08774271.4
(22) Anmeldetag: 25.06.2008
(51) Int. Cl.: B01D 45/08, F22B 37/26, B01D 1/28

(54) **ABSCHEIDER**
SEPARATOR
SEPARATEUR

(30) Priorität: 27.07.2007 EP 07014818
(43) Veröffentlichungstag der Anmeldung: 07.04.2010
(73) Patentinhaber: Siemens Aktiengesellschaft, 80333 München (DE)
(72) Erfinder: GEISNER, Jürgen, 47228 Duisburg (DE); PINKEPANK, Lutz, 6600 Plettenberg Bay (ZA)
(86) Internationale Anmeldenummer: PCT/EP2008/058055
(87) Internationale Veröffentlichungsnummer: WO 2009/015949

(56) Entgegenhaltungen:
- EP-A- 0 043 760
- EP-A- 0 306 807
- EP-A- 0 462 687
- CH-A5- 561 076
- GB-A- 2 199 260
- JP-A- 5 060 093
- JP-A- 56 053 716
- SU-A1- 578 985
- US-A- 4 877 431
- US-A- 5 112 375

## Beschreibung

Die Erfindung betrifft einen Abscheider, insbesondere einen Demister, zur Abscheidung eines Abscheidemediums, insbesondere einer Flüssigkeit, aus einem strömenden Fluid mit mindestens einer Einströmung und mindestens einer Abströmung, wobei die Strömung durch den Abscheider mittels Abscheidelementen geführt ist, welche die Strömung an Umlenkstellen umlenken und in den Bereich der Umlenkstellen Medienabscheider aufweisen, wobei das strömende Fluid den Abscheider entlang mindestens zweier Pfade durchströmt, einem ersten Pfad und einem zweiten Pfad, welche sich hinsichtlich ihrer Ausrichtung zur Erdbeschleunigung unterscheiden.

In verschiedenen Verfahren ist die Abscheidung von Flüssigkeiten, insbesondere von Kondensaten, die in einem strömenden Fluid Tröpfchen bilden, von entscheidender Bedeutung. Bisweilen ist für weitere verfahrenstechnische Behandlung das Kondensat von besonderem Interesse, üblicherweise ist jedoch das Ziel der Abscheidung eine Befreiung des strömenden Fluids von flüssigen Bestandteilen, die nachfolgende Verfahrensschritte beeinträchtigen könnten. Beispielsweise ist eine Verdichtung eines mit flüssigen Tröpfchenkondensat belasteten Fluids regelmäßig für den Verdichter mit inakzeptabel hohem Verschleiß oder sogar unabwendbaren Beschädigungen verbunden. Eine häufige Anwendung von Flüssigkeitsabscheidern findet sich im Anschluss an eine Kühlung von einem strömenden Fluid, beispielsweise bei einer Zwischenkühlung zwischen zwei Kompressionsstufen einer Verdichtung. Zum Abscheiden von Kondensat werden im Stand der Technik häufig Tropfenabscheider des Vane-types verwendet, deren Funktionsrichtung vertikal zur Strömungsrichtung liegt. Die häufigste Form der Anwendung ist hierbei eine Durchströmung dieser Abscheider senkrecht zur Erdbeschleunigung und ein Abfließen des Abscheidemediums bzw. der Flüssigkeit durch Abscheidelemente getrieben von der Erdbeschleunigung. Derartige Anordnungen sind äußerst raumgreifend und verhindern insbesondere eine kompakte integrale Bauweise, beispielsweise mit einem Verdichter oder anderen Verfahrensvorrichtungen, mit denen die Abscheider in Verbindung stehen. Die separate Aufstellung der Abscheider hat darüber hinaus zur Folge, dass die Topologie der Aufstellung an die örtlichen Gegebenheiten angepasst wird und die einzelnen Verfahrensvorrichtungen, insbesondere der Abscheider mit den anschließenden Verfahrensvorrichtungen mittels einfacher Verrohrungen verbunden wird, die keine strömungstechnische Optimierung erfahren haben, da dies für den jeweiligen Einzelfall zu aufwendig wäre. Eine kombinierte Ausführung eines Abscheiders mit den benachbarten Verfahrensvorrichtungen wäre der Modularität sehr förderlich. Der bisherige unflexible Einsatz von Abscheidern infolge der regelmäßig kastenförmigen Ausbildung dieser Einheiten verhindert jedoch eine integrierte Bauform. Die mangelnde Flexibilität ist insbesondere der vorgeschriebenen Aufstellungsweise herkömmlicher Abscheider geschuldet.

Aus den Druckschriften US-A-4 877 431, EP-A-0 306 807, EP-A-0 043 760, US-A-5112 375, SU 578 985 A1, JP 05 060093 A, JP 56 053716 A, CH 561 076 A5, GB-A-2 199260, EP-A-0 462 687 sind bereits verschiedene Varianten von horizontal und vertikal durchströmten, ringförmigen, statischen oder rotierenden, konischen, dachförmigen und sternförmigen Tröpfchen-Abscheider bekannt.

Ausgehend von den vorbeschriebenen Problemen hat es sich die Erfindung daher zur Aufgabe gemacht, einen Abscheider zu schaffen, der ein höheres Maß an Flexibilität hinsichtlich der Aufstellung und somit insbesondere eine integrierte Bauform mit anderen Verfahrensvorrichtungen ermöglicht.

Zur Lösung der erfindungsgemäßen Aufgabe wird vorgeschlagen, einen Abscheider der eingangs genannten Art derart fortzubilden, dass mindestens ein Abscheidelement, welches die Strömung entlang des ersten Pfades leitet, unterschiedlich ausgebildet ist, gegenüber einem anderen Abscheidelement, welches die Strömung entlang des zweiten Pfades leitet.

Die Erfindung geht mit der Erkenntnis einher, dass die mangelnde Flexibilität von Abscheidern, insbesondere in der Funktionsweise der im Inneren befindlichen Abscheidelemente begründet ist. Infolge ihrer identischen Ausbildungen müssen sämtliche Abscheidelemente eines herkömmlichen Abscheiders in einer bestimmten Ausrichtung zu der Fluidströmung und zu der Erdbeschleunigung aufgestellt werden, um eine korrekte Funktion zu gewährleisten. Darüber hinaus sind sämtliche Abscheidelemente herkömmlicher Abscheider nahezu identisch ausgerichtet oder arbeiten nicht mit ihrer vollen Wirkung. Die Erfindung beschreitet hier einen neuen Weg, indem die Abscheidelemente einerseits nicht mehr identisch zur Erdbeschleunigung ausgerichtet sind und andererseits die Abscheidelemente selbst zu einem gewissen Grad an ihre Ausrichtung individuell angepasst sind. Diese Bauweise hat einerseits den Vorteil, dass abweichend von der bisherigen Kastenform regelmäßig rechteckigen Querschnitts andere Formen technisch möglich werden und andererseits die neuen Bauformen nicht nur keinen niedrigeren Wirkungsgrad aufweisen, sondern die vorhandenen Abscheidelemente effizienter genutzt werden infolge ihrer individuellen Anpassung an ihre jeweilige Einbauposition. Die Möglichkeiten der flexibleren Formgebung des Abscheiders eröffnet gleichzeitig den Weg zu einer Integration des Abscheiders in oder an benachbarte Verfahrensvorrichtungen, so kann beispielsweise ein Abscheider integrierte Modulkomponente eines zwischengekühlten Verdichters sein, so dass nach jeder Zwischenkühlung eine Flüssigkeitsabscheidung mittels eines Demisters erfolgt. Zweckmäßig kann ein solcher Demister bzw. Abscheider sich ringförmig um den Eintritt in eine radiale Verdichtungsstufe erstrecken und beispielsweise von außen nach innen durchströmt werden.

Zweckmäßig sind die Abscheidelemente an mindestens einer überströmten Fläche quer zur Strömungsrichtung gewellt oder gezackt ausgebildet, so dass die Strömung an dem Wellen- oder Zackenprofil umgelenkt wird. Um eine möglichst verlustfreie Durchströmung des Abscheiders entlang dieser Umlenkprofile zu gewährleisten, können in optimierten Abständen Strömungsführungen vorgesehen sein, welche eine Strömung in Längsrichtung der Wellen- oder Zackenform verhindern. Eine vorteilhafte Weiterbildung sieht vor, dass die Medienabscheider als Ausnehmungen im Bereich der Umlenkstellen an den Abscheidelementen ausgebildet sind, so dass Anteile des Fluids, welche der Umlenkung nicht völlig folgen, als Abscheidemedium in die Ausnehmungen geraten und auf eine Abscheideseite des Abscheidelements abgeschieden werden. Regelmäßig handelt es sich bei den Anteilen des Fluids, die schließlich das Abscheidemedium bilden, um diejenigen höherer Dichte, insbesondere Kondensate. Eine besondere Herausforderung für die Erfindung ist die Vermeidung eines Rückflusses des Abscheidemediums aus den Abscheidelementen auf die Seite des bereinigten Fluids. Hierzu sieht die Erfindung vorzugsweise Strömungsleitelemente auf der Abscheideseite des Abscheidelementes zur Führung des Abscheidemediums vor, welche im Bereich der Ausnehmung angebracht sind und einen Rückfluss des Abscheidemediums durch die Ausnehmung verhindern. Genau diese Strömungsleitelemente sind hinsichtlich ihrer Ausbildung/oder ihrer Position und/oder der Ausrichtung ihrer Anbringung auf der Abscheideseite im Bereich der Ausnehmung individuell an die Ausrichtung des Abscheidelementes zu der Fluidströmung und insbesondere zu der Erdbeschleunigung angepasst.

Mit Vorteil sind die Abscheidelemente als gewellte oder gezackte Hohlkammern ausgebildet, wobei sich die Abscheideseite im Inneren der Kühlkammer befindet. Insbesondere ermöglicht diese Hohlkammerausbildung eine beidseitige Umströmung der Abscheidelemente, wenn die Hohlkammer nicht nur einseitig gezackt oder gewellt ausgebildet ist, sondern mindestens zwei Oberflächen der Hohlkammer einer Wellenform bzw. Zackenform folgen. Definiert man diejenigen Flächen, welche die Strömung mittels eines Aufprallens oder Stauens infolge ihres in-den-Weg-Stellensin-die-Strömung umleiten als Druckseiten des Abscheidelements und die anderen Flächen als Saugseiten, so sind die Medienabscheider bzw. Ausnehmungen an den Druckseiten der Abscheidelemente vorgesehen. Ist ein solches Abscheidelement als Hohlkammer mit zwei sich gegenüber liegenden gewellten oder gezackten Oberflächen, die von dem Fluid umströmt werden, ausbildet, so befindet sich auf den jeweiligen Druckseiten beidseitig jeweils mindestens ein Medienabscheider, so dass bevorzugt wechselseitig in Strömungsrichtung Abscheidemedium auf die Abscheideseite der Hohlkammer fließt.

Mit Vorteil ist die Abscheideseite mit einem Sammler in strömungsleitender Verbindung, so dass sich im Sammler das Abscheidemedium bevorzugt getrieben von der Schwerkraft sammelt. Zweckmäßig ist das Abscheidelement in dem Abscheider und zu dem Sammler derart ausgerichtet, dass das Abscheidemedium nur von der Erdbeschleunigung getrieben sich im Sammler sammelt.

Eine bevorzugte Ausführungsform sieht vor, dass die Strömungsleitelemente die Ausnehmungen auf der Abscheideseite dachpfannenartig abdecken, so dass von der Erdbeschleunigung getriebenes Abscheidefluid nicht zurück durch die Ausnehmungen der Medienabscheider gerät.

Bei einer Ausbildung des Abscheiders als Ringabscheider oder Ringsegmentabscheider, der sich mindestens über einen Teil einer Umfangsrichtung erstreckt und radial durchströmt wird, ist es sinnvoll, wenn die Abscheidelemente in Abhängigkeit von ihrer Umfangsposition in Gruppen unterschiedlicher Ausbildung eingeteilt sind, so dass insbesondere das Abscheidemedium von der Abscheideseite nicht zurück gerät auf die Seite der Fluidumströmung. Die Aufteilung in Gruppen kann beispielsweise in Umfangswinkelbereichen erfolgen, so haben sich Segmentbereiche von 45° oder 30° als zweckmäßig erwiesen. Hierbei kann vorteilhaft berücksichtigt werden, dass hinsichtlich ihrer Ausrichtung zur Erdbeschleunigung ein beispielsweise linker Teil eines Ringabscheiders symmetrisch ist zu dem rechten Teil und auch die Abscheidelemente daher in sich entsprechenden Umfangspositionen identisch ausgebildet sein können.

Im Folgenden ist die Erfindung anhand eines speziellen Ausführungsbeispiels verdeutlicht. Die Bezugnahme auf diese zurzeit bestmögliche bekannte Ausführungsform ist nicht als Einschränkung der Erfindung auf diese zu verstehen. Vielmehr ergeben sich für den Fachmann aus dieser Beschreibung der Erfindung zahlreiche abweichende Ausführungsformen, die ebenfalls der Erfindung zuzurechnen sind. Es zeigt:
- FIG 1: eine schematische Darstellung eines erfindungsgemäßen Ringabscheiders bzw. von Abscheidelementen in verschiedenen Umfangspositionsgruppen,
- FIG 2: eine Detaildarstellung eines Umfangspositionsbereichs eines Ringabscheiders nach der Erfindung.

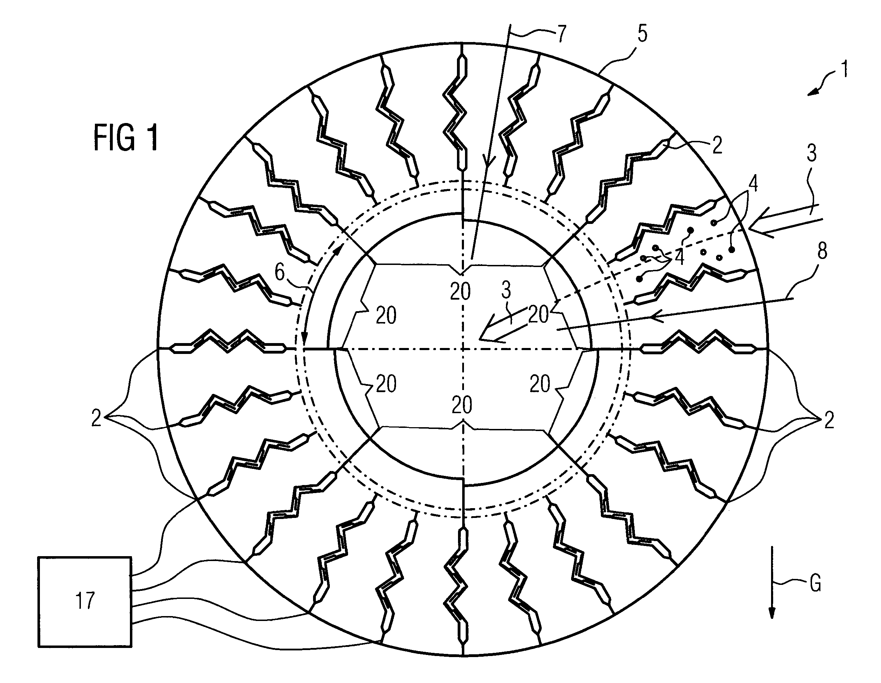

FIG 1 zeigt einen ringförmigen Abscheider 1 in schematischer Darstellung, wobei zur Vereinfachung nur einige Abscheidelemente 2 repräsentativ für Abscheidelemente 2 in verschiedenen Umfangspositionen gezeigt sind. Der Abscheider 1 wird radial von außen nach innen von einem Fluid 3, welches Kondensat bzw. ein Abscheidemedium 4 transportiert, durchströmt. Der äußere Umfang des Abscheiders bildet eine Einströmung 5, und die sich in die Zeichnungsebene auf dem inneren Durchmesser erstreckende Fläche bildet eine Abströmung 6. Zwischen den verschiedenen Abscheidelementen 2 befinden sich unterschiedliche Pfade der Durchströmung durch das Fluid 3, so dass bei einer Aufteilung des ringförmigen Abscheiders 1 im Sinne einer Skala einer Analoguhr ein erster Pfad 7 auf 12:00 Uhr gegenüber einem zweiten Pfad 8, beispielsweise auf 03:00 Uhr, bezogen auf die Erdbeschleunigung G, eine unterschiedliche Ausrichtung hat.

Gegenüber der Erdbeschleunigung G unterscheiden sich sämtliche Pfade 7,8 zwischen den einzelnen Abscheidelementen 2 eines Halbrings zwischen 6:00 und 12:00 Uhr bzw. 12:00 und 06:00 Uhr hinsichtlich ihrer Ausrichtung zur Erdbeschleunigung G.

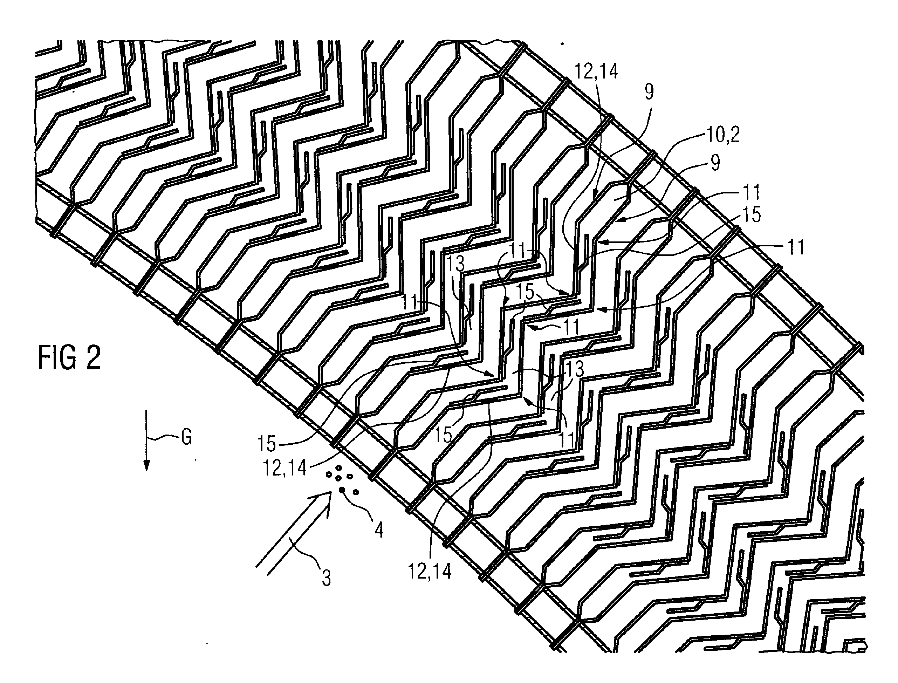

Der Abscheider der Fig. 2 wird von innen nach außen durchströmt. Wie in Figur 2 im Einzelnen gezeigt, sind die Abscheidelemente 2 als Hohlkammern 10 ausgebildet, wobei jede Hohlkammer 10 zwei sich gegenüberliegende überströmte Flächen 9 aufweist, die zickzack-förmig ausgebildet ist, wobei sich die von der Zickzack-Form gebildeten Rillen quer zur Strömungsrichtung des Fluids 3 erstrecken. Auf diese Weise wird das Fluid 3 an Umlenkstellen 11 von dem Weg einer geradlinigen Radialen in Umfangsrichtung der Ringform des Abscheiders 1 abwechselnd abgelenkt. Dort, wo das Fluid aus seinem radialen Weg gleichsam gegen die überströmte Fläche 9 an einer Umlenkstelle 11 aufprallt, befindet sich ein Medienabscheider 12 in Form einer Ausnehmung 14, in welche Anteile des Fluids 3, die der Umlenkung nicht vollständig folgen können als Abscheidmedium 4 auf eine Abscheideseite 13 des Abscheidelements 2 hineingeraten. Diese Anteile 4 des Fluids 3 weisen regelmäßig eine höhere Dichte auf, so dass sie durch die Zentrifugalkraft an der Umlenkstelle 11 in den Medienabscheider 12 hineingetragen werden. Die Hohlkammer 10 des Abscheidelements 2 bildet die Abscheideseite 13, wobei das abgeschiedenen Abscheidemedium 4 sich in der Hohlkammer 10 getrieben von der Erdbeschleunigung G zunächst an bestimmten Punkten der Querschnittsform sammelt.

Damit von dem Abscheidemedium 4 nichts zurück auf die Seite des strömenden Fluids 3 gerät, sind im Inneren der Hohlkammer 10 Strömungsleitelemente 15 vorgesehen, die die Medienabscheider 12 bzw. Ausnehmungen 14 dachpfannenartig derart abdecken, dass das Abscheidemedium 4 bei seiner Strömung im Bereich der Ausnehmung 14, diese ohne auszutreten passieren kann.

Die Hohlkammern 10 bzw. die Abscheideseite 13 steht mit einem Sammler 17 in Verbindung, in den das abgeschiedene Abscheidemedium 14 getrieben von der Erdbeschleunigung G hineinfließt.

Die Abscheidelemente 2 befinden sich sämtlich in unterschiedlichen Orientierungen relativ zur Erdbeschleunigung G und sind einerseits von ihrer äußeren Kontur her unterschiedlich ausgebildet oder zumindest anders angeordnet und andererseits weisen sie eine unterschiedliche Anbringung der Strömungsleitelemente 15 im Inneren der Hohlkammer 10 bzw. auf der Abscheideseite 13 auf. Die Abscheidelemente 2 sind in Abhängigkeit von ihrer Umfangsposition bzw. Ausrichtung zur Erdbeschleunigung G in Gruppen 20 unterschiedlicher Ausbildung eingeteilt, wobei sich eine Gruppenzugehörigkeit jeweils auf etwa 45° eines Umfangswinkels erstreckt, im vorliegenden Beispiels von 06:00 bis 07:30 Uhr von 07:30 bis 09:00 Uhr, von 09:00 bis 10:30 Uhr und von 10:30 bis 12:00 Uhr und entsprechend spiegelsymmetrisch auf der anderen Seite der vertikalen Symmetrieachse. Daher ergibt sich in der 10:30 - 13:30 Uhr und 4:30 - 19:30 Uhr Position jeweils eine sich über 90° erstreckende Gruppe 20.

## Patentansprüche

1. Abscheider (1), insbesondere Demister zur Abscheidung eines Abscheidemediums (4) aus einem strömenden Fluid (3) mit mindestens einer Einströmung (5) und mindestens einer Abströmung (6), wobei die Strömung durch den Abscheider (1) mittels Abscheidelementen (2) geführt ist, welche die Strömung an Umlenkstellen (11) umlenken und in dem Bereich der Umlenkstellen (11) Medienabscheider (12) aufweisen, wobei die Medienabscheider (12) als Ausnehmungen (14) im Bereich der Umlenkstellen (11) an den Abscheidelementen (2) ausgebildet sind, so dass Anteile des Fluids (3), welche der Umlenkung nicht völlig folgen, als Abscheidemedium (4) in die Ausnehmungen (14) geraten und auf eine Abscheideseite (13) des Abscheidelements (2) abgeschieden werden,
**dadurch gekennzeichnet, dass** das strömende Fluid (3) den Abscheider (1) entlang mindestens zweier unterschiedlicher Pfade (7,8) durchströmt, einen ersten Pfad (7) und einen zweiten Pfad (8), welche Pfade (7,8) sich hinsichtlich ihrer Ausrichtung zur Erdbeschleunigung (G) unterscheiden, wobei mindestens ein Abscheidelement (2), welches die Strömung entlang des ersten Pfades (7) leitet, unterschiedlich ausgebildet ist, gegenüber einem Abscheidelement (2), welches die Strömung entlang eines zweiten Pfades (8) leitet, wobei der Abscheider als Ring oder als Ringsegment ausgebildet ist und radial durchströmt wird.

2. Abscheider (1) nach Anspruch 1 oder 2,
**dadurch gekennzeichnet, dass** die Abscheidelemente (2) an mindestens einer überströmten Fläche (9) quer zur Strömungsrichtung gewellt oder gezackt ausgebildet sind, so dass die Strömung an den Wellen- oder Zackenprofilen umgelenkt wird.

3. Abscheider (1) nach Anspruch 2,
**dadurch gekennzeichnet, dass** das Abscheidelement (2) auf der Abscheideseite (13) Strömungsleitelemente (16) zur Führung des Abscheidemediums (4) aufweist, welche im Bereich der Ausnehmung (14) angebracht sind und einen Rückfluss des Abscheidemediums (4) durch die Ausnehmung (14) verhindern.

4. Abscheider (1) nach mindestens einem der vorhergehenden Ansprüche,
**dadurch gekennzeichnet, dass** die Abscheidelemente (2) als gewellte oder gezackte Hohlkammern (10) ausgebildet sind, wobei sich die Abscheideseite (13) im Inneren der Hohlkammer (10) befindet.

5. Abscheider (1) nach mindestens einem der vorhergehenden Ansprüche,
**dadurch gekennzeichnet, dass** die Abscheideseite (13) mit einem Sammler (17) in strömungsleitender Verbindung steht, so dass sich im Sammler (17) das Abscheidemedium (4) sammelt.

6. Abscheider (1) nach mindestens einem der vorhergehenden Ansprüche,
**dadurch gekennzeichnet, dass** die Abscheidelemente (2) in dem Abscheider (1) und zu dem Sammler (17) derart ausgerichtet sind, dass das Abscheidemedium (4) sich im Sammler (17) getrieben von der Erdbeschleunigung (G) sammelt.

7. Abscheider (1) nach mindestens einem der vorhergehenden Ansprüche, **dadurch gekennzeichnet, dass** die Strömungsleitelemente (16) die Ausnehmungen (14) dachpfannenartig abdecken, so dass von der Erdbeschleunigung (G) getriebenes Abscheidemedium (4) nicht zurück durch die Ausnehmungen (14) gerät.

8. Abscheider (1) nach mindestens einem der vorhergehenden Ansprüche, **dadurch gekennzeichnet, dass** der Abscheider (1) als Ringabscheider mit radialer Durchströmung ausgebildet ist und die Abscheidelemente (2) in Abhängigkeit von ihrer Umfangsposition in Gruppen (20) unterschiedlicher Ausbildung eingeteilt sind, so dass Abscheidemedium (4) von der Abscheideseite (13) nicht zurückfließen kann.

## Claims

1. Separator (1), particularly a demister, for separating a separating medium (4) from a flowing fluid (3), having at least one inflow (5) and at least one outflow (6), the flow through the separator (1) being conducted by means of separating elements (2) which deflect the flow at deflecting points (11) and have media separators (12) in the region of the deflecting points (11), the media separators (12) being formed as clearances (14) in the region of the deflecting points (11) on the separating elements (2), with the result that fractions of the fluid (3) that do not fully follow the deflection enter the clearances (14) as separating medium (4) and are separated to a separating side (13) of the separating element (2), **characterized in that** the flowing fluid (3) flows through the separator (1) along at least two different paths (7, 8), a first path (7) and a second path (8), which paths (7, 8) differ with respect to their orientation with respect to the acceleration due to gravity (G), at least one separating element (2) which conducts the flow along the first path (7) being formed differently than a separating element (2) which conducts the flow along a second path (8), the separator being formed as a ring or as a ring segment and flowed through radially.

2. Separator (1) according to Claim 1, **characterized in that** the separating elements (2) are formed in a wavy or serrated manner transversely with respect to the direction of flow on at least one flowed-over surface (9), with the result that the flow is deflected at the wave or serration profile.

3. Separator (1) according to Claim 2, **characterized in that** the separating element (2) has on the separating side (13) flow conducting elements (16) for conducting the separating medium (4), which are attached in the region of the clearance (14) and prevent a return flow of the separating medium (4) through the clearance (14).

4. Separator (1) according to at least one of the preceding claims, **characterized in that** the separating elements (2) are formed as wavy or serrated hollow chambers (10), the separating side (13) being located in the interior of the hollow chamber (10).

5. Separator (1) according to at least one of the preceding claims, **characterized in that** the separating side (13) is in flow-conducting connection with a collector (17), with the result that the separating medium (4) collects in the collector (17).

6. Separator (1) according to at least one of the preceding claims, **characterized in that** the separating elements (2) are oriented in the separator (1) and with respect to the collector (17) in such a way that the separating medium (4) collects in the collector (17), driven by the acceleration due to gravity (G).

7. Separator (1) according to at least one of the preceding claims, **characterized in that** the flow conducting elements (16) cover the clearances (14) in the manner of roofing tiles, with the result that separating medium (4) driven by the acceleration due to gravity (G) does not return through the clearances (14).

8. Separator (1) according to at least one of the preceding claims, **characterized in that** the separator (1) is formed as a ring separator with radial through-flow and, depending on their circumferential position, the separating elements (2) are divided into groups (20) of different forms, with the result that the separating medium (4) cannot return from the separating side (13).

## Revendications

1. Séparateur (1), notamment dispositif anti-buée pour la séparation d'un milieu (4) à séparer d'un fluide (3) en écoulement, comprenant au moins une entrée (5) et au moins une sortie (6), le courant étant guidé dans le séparateur (1) au moyen d'éléments (2) de séparation, qui dévient le courant en des points (11) de déviation et qui ont des séparateurs (12) de milieu dans la zone des points (11) de déviation, les séparateurs (12) de milieu étant constitués, sur les éléments (2) de séparation, sous la forme d'évidements (14) dans la zone des points (11) de déviation, de sorte que des parties du fluide (3), qui ne suivent pas complètement la déviation, arrivent comme milieu (4) à séparer dans les évidements (14) et se déposent sur un côté (13) de séparation de l'élément (2) de séparation, **caractérisé en ce que** le fluide (3) en écoulement passe dans le séparateur (1) suivant au moins deux trajets (7, 8) différents, un premier trajet (7) et un deuxième trajet (8), lesquels trajets (7, 8) se distinguent par leur orientation par rapport à l'accélération (G) de la pesanteur, au moins un élément (2) de séparation qui conduit le courant suivant le premier trajet (7) étant constitué différemment d'un élément (2) de séparation qui conduit le courant suivant un deuxième trajet (8), le séparateur étant constitué en anneau ou en segment annulaire et étant traversé radialement.

2. Séparateur (1) suivant la revendication 1 ou 2,
**caractérisé en ce que** les éléments (2) de séparation sont ondulés ou dentelés, transversalement à la direction d'écoulement, sur au moins une surface (9) de débordement, de sorte que le courant est dévié sur les profilés ondulés ou dentelés.

3. Séparateur (1) suivant la revendication 2,
**caractérisé en ce que** l'élément (2) de séparation a, sur le côté (13) de séparation, des éléments (16) de conduite du courant pour la conduite du milieu (4) à séparer, qui sont mis dans la zone de l'évidement (14) et qui empêchent un reflux par l'évidement (14) du milieu (4) à séparer.

4. Séparateur (1) suivant au moins l'une des revendications précédentes,
**caractérisé en ce que** les éléments (2) de séparation sont constitués sous la forme de chambres (10) creuses ondulées ou dentelées, le côté (13) de séparation se trouvant à l'intérieur de la chambre (10) creuse.

5. Séparateur (1) suivant au moins l'une des revendications précédentes,
**caractérisé en ce que** le côté (13) de séparation est en liaison fluidique avec un collecteur (17), de sorte que le milieu (4) à séparer s'accumule dans le collecteur (17).

6. Séparateur (1) suivant au moins l'une des revendications précédentes,
**caractérisé en ce que** les éléments (2) de séparation sont dirigés dans le séparateur (1) et par rapport au collecteur (17), de manière à ce que le milieu (4) à séparer s'accumule dans le collecteur (17), en étant entraîné par l'accélération (G) de la pesanteur.

7. Séparateur (1) suivant au moins l'une des revendications précédentes,
**caractérisé en ce que** les éléments (16) de conduite du courant recouvrent les évidements (14), à la manière de tuiles, de sorte que du milieu (4) à séparer entraîné par l'accélération (G) de la pesanteur ne reflue pas par les évidements (14).

8. Séparateur (1) suivant au moins l'une des revendications précédentes,
**caractérisé en ce que** le séparateur (1) est constitué sous la forme d'un séparateur annulaire traversé radialement et les éléments (2) de séparation sont répartis en fonction de leur position périphérique en groupe (20) de constitution différente, de sorte que du milieu (4) à séparer ne peut pas refluer du côté (13) de séparation.
